Europäisches Patentamt

European Patent Office

Office européen des brevets

(19)

(11) Veröffentlichungsnummer: **0 149 732**
**B1**

(12) # EUROPÄISCHE PATENTSCHRIFT

(45) Veröffentlichungstag der Patentschrift:
26.07.89

(51) Int. Cl.⁴: **B 60 C 27/10**

(21) Anmeldenummer: 84112769.9

(22) Anmeldetag: 23.10.84

(54) Gleitschutzkette für Fahrzeugreifen.

(30) Priorität: 20.01.84 DE 3401972

(43) Veröffentlichungstag der Anmeldung:
31.07.85 Patentblatt 85/31

(45) Bekanntmachung des Hinweises auf die Patenterteilung:
26.07.89 Patentblatt 89/30

(84) Benannte Vertragsstaaten:
AT BE CH DE LI NL

(56) Entgegenhaltungen:
EP-A- 0 121 193
DE-A- 2 020 452
DE-A- 3 331 647
FR-A- 2 543 070
US-A- 2 176 631

(73) Patentinhaber: Steirische Kettenfabriken
Pengg-Walenta KG, Theodor-Körner Strasse 59,
A-8021 Graz (AT)

(72) Erfinder: Jeindl, Ferdinand, Dipl.-Ing., Körblergasse 59,
A-8010 Graz (AT)

(74) Vertreter: Fehners, Klaus Friedrich, Dipl.-Ing.
Dipl.-Wirtsch.-Ing. et al, Patentanwälte Dipl.-Ing. A.
Wedde Dipl.-Ing. K. Empl Dipl.-Ing., Dipl.-Wirtsch.-Ing. K.
Fehners Schumannstrasse 2, D-8000 München 80 (DE)

## Beschreibung

Die Erfindung betrifft eine Gleitschutzkette für Fahrzeugreifen mit einer in montiertem Zustand jeweils gegen die Innenseite und die Außenseite des Reifens zur Anlage kommenden inneren und äußeren Halterung für sich über die Lauffläche des Reifens erstreckende Laufketten, wobei sowohl die innere als auch die äußere Halterung öffen- bzw. verschließbar sind, und die innere Halterung als ein an einer Stelle offener, mit einem Hakenverschluß versehener Federstahlbügel ausgebildet ist, wobei der an einem ersten freien Ende der inneren Halterung angeordnete eine Verschlußteil als im wesentlichen die Form eines Vierecks aufweisende Öse, und der andere, an einem zweiten freien Ende der inneren Halterung angeordnete Verschlußteil als senkrecht zur die Öffnung für den Haken enthaltenden Ebene der Öse angeordneter Haken ausgebildet ist.

Solche bekannten Gleitschutzketten können von der Bedienungsperson in einfacher Weise auf den Fahrzeugreifen aufgezogen werden, indem nämlich der Federstahlbügel mit beiden Händen aufgebogen und über den Fahrzeugreifen gestreift wird, wobei sich der Federstahlbügel auf der Rückseite des Reifens, insbesondere an dessen Wandung anlegt und in seine ursprüngliche Form zurückkehrt.

Da die Radinnenseiten jedoch regelmäßig nicht von der Bedienungsperson frei eingesehen werden können, gestaltet sich bei diesen Gleitschutzketten das Schließen und Öffnen der an den beiden freien Enden des Federstahlbügels angeordneten und sich gegenüberliegenden Verschlußteile schwierig.

Ein solcher Haken- und Ösen-Verschluß ist beispielsweise aus der EP-A-0 121 193 (veröffentlicht am 10. 10. 84) bekannt. An dem einen Ende der inneren Halterung ist ein einfacher durch Umbiegen gestalteter Haken angeordnet, an dem anderen Ende der inneren Halterung eine schmale, längliche, annähernd viereckige Öse, welche jedoch mit der durch ihre Öffnung bestimmten Ebene senkrecht zur von der ringförmigen inneren Halterung gebildeten Ebene angeordnet ist. Zusätzlich ist an dieser Öse eine trichterförmige Halbschale angeordnet, welche das Auffinden der Öse und das Einhaken in dieser für den Haken an dem einen Ende der inneren Halterung erleichtern soll, jedoch keinerlei Erleichterung bezüglich des Lösens des Hakens aus der Öse bewirkt.

Insbesondere ist nachteilig bei dieser bekannten Verschlußlösung, daß die Öffnungsbreite der Öse gegenüber der Breite bzw. Dicke des Hakens nur unwesentlich größer ist, und damit leicht der Haken an der Öse vorbeigeführt werden kann. Darüber hinaus kann sich die trichterförmige Halbschale leicht durch Schmutz und Schnee bzw. Eis vollsetzen, und ein Lösen der Hakenverbindung erschweren.

Aus der DE-A-2 020 454 der eingangs genannten Gattung ist ein Haken- und Ösen-Verschluss bekannt, bei welchem die Öse mit ihrer die Öffnung enthaltenden Ebene flach auf der Reifenseitenwandung aufliegt, deren dem Haken zugewandte Seite jedoch insbesondere im Inneren der Öffnung kaum breiter als der Haken selbst ausgebildet ist.

Auch hier erschwert sich das Auffinden bzw. das Einrasten von Haken und Öse, und auch das Lösen der Haken- und Ösen-Verbindung ist nicht durch einfaches Zusammendrücken der Enden der inneren Halterung durchführbar.

Die Erfindung stellt sich nun die Aufgabe, eine einfach und robust ausgebildete Verschlußvorrichtung für die als Federstahlbügel ausgebildete innere Halterung einer Gleitschutzkette zu schaffen, welche sowohl das Schließen als auch insbesondere das Öffnen der Verschlußteile durch die Bedienungsperson in einfacher Weise ermöglicht, ohne daß diese sich an besondere Markierungshilfen orientieren oder gegebenenfalls auch mit den Händen die Lage der Verschlußteile nachprüfen muß, wobei die Verschlußvorrichtung so einfach ausgebildet sein soll, daß weder eine Verschmutzung noch Vereisung das Lösen der Verbindung beeinträchtigen kann.

Diese Aufgabe wird bei einer Gleitschutzkette der eingangs genannten Art dadurch gelöst, daß die Öse mit ihrer die Öffnung für den Haken enthaltenden Ebene an der Reifenseitenwandung aufliegt und mindestens die dem Haken zugewandte Unterseite der Öse gegenüber den anderen Seiten wesentlich breiter ausgebildet ist, so daß die Öffnung der Öse gegenüber der Breite bzw. Dicke des Hakens um ein Mehrfaches größer ist.

Diese erfindungsgemäße Ausbildung von Haken und Öse gewährleistet, daß diese beim Zusammendrücken des Federstahlbügels ohne genaues Aufeinanderzielen gegeneinanderstoßen, und die Bedienungsperson den Haken blind in die Öse einführen und einrasten lassen kann, ohne daß die Verschlußteile versehentlich, und ohne daß diese sich berühren, aneinander vorbeigeführt werden.

In vorteilhafter Weiterbildung der Erfindung sind die Unter- und Oberseiten der viereckigen Öse als paralleler unterer und oberer Steg ausgebildet und gegenüber der Mittelsenkrechten auf der kreisförmigen Mittellinie des Federstahlbügels geneigt angeordnet, dergestalt, daß der von der Außenkante des Steges mit der Mittelsenkrechten eingeschlossene, zur Radachse weisende Winkel sich zur Öse hin öffnet. Wenn die Bedienungsperson die jeweils mit einer Hand gehaltenen freien Enden des Federstahlbügels gegeneinanderführt, kann bei zunehmendem Drücken der Haken nicht etwa radial nach außen an der Öse vorbeigeführt, sondern nur nach innen und damit in die Öse hingleitend zugeführt werden, bis er den unteren Steg der Öse überspringt und in diese einrastet.

Erfindungsgemäß kann die Öse ein Parallelogramm sein, dessen Unter- und Oberseite als unterer und oberer Steg ausgebildet und gegenüber der Mittelsenkrechten auf der kreisförmigen Mittellinie des Federstahlbügels geneigt angeordnet ist, dergestalt, daß der von der Außenkante des Steges mit der Mittelsenkrechten eingeschlossene, zur Radachse weisende Winkel sich zur Öse hin öffnet.

Hiedurch ergibt sich der Vorteil, daß der untere Steg mit seiner Stirnkante verhältnismäßig weit nach außen steht und den ebenfalls nach außen weisenden Haken besser aufnehmen kann.

Weiter ist erfindungsgemäß die Längsachse des Hakens senkrecht zur Längsachse des unteren Steges angeordnet, wodurch erreicht wird, daß die Stirnseite des Hakens besser auf der Stirnkante der Öse aufgleiten kann.

Vorteilhaft ist die Innenkante des unteren Steges im wesentlichen als schiefe Ebene ausgebildet, deren höchster Punkt gegenüber der Außenkante des Steges zur Reifenachse hin gelegen ist.

Diese Ausbildung der Innenkante des Steges bewirkt, daß der Haken trotz verhältnismäßig großer Öffnung der Öse in eingerastetem Zustand arretiert bleibt, d.h. auch bei Auftreten von Fliehkräften etc. nicht seine Einraststellung verändert und sich etwa innerhalb der Öse bewegt.

Vorteilhaft ist der Haken an seiner Stirnseite als schiefe Ebene ausgebildet, deren höchster Punkt der Hakenöffnung gegenüber liegt.

Hierdurch wird das Aufeinanderschieben des Hakens auf die Stirnkante der Öse wesentlich erleichtert, und zwar dergestalt, daß die Bedienungsperson ohne die Verschlußteile zu sehen, den Haken nur im Sinne des Einrastvorganges auf die Öse zu bewegen kann.

In weiterer vorteilhafter Ausbildung ist der Haken gegenüber der kreisförmigen Mittellinie des Federstahlbügels zur Radwandung hin abgekröpft, wobei die Innenseite der Abkröpfung ebenfalls als zur schiefen Ebene der Stirnseite des Hakens parallele Ebene ausgebildet ist.

Diese Ausbildung gewährleistet, daß der Haken während des Ausrastvorganges durch Drücken der Verschlußteile gegeneinander nicht nur an der Innenkante des oberen Steges, sondern auch die Innenseite der Abkröpfung des Hakens auf der Außenkante des unteren Steges der Öse aufgleiten und damit den Lösungsvorgang wesentlich erleichtern kann.

Weitere Einzelheiten und Vorteile der Erfindung ergeben sich aus der nachfolgenden Beschreibung eines in den Zeichnungen schematisch dargestellten bevorzugten Ausführungsbeispieles.

Es zeigen:

Fig. 1 eine Seitenansicht der nicht eingerasteten, als Haken und Öse ausgebildeten Enden eines Federstahlbügels,

Fig. 2 eine Draufsicht auf eingerasteten Haken und Öse und

Fig. 3 eine Funktionsskizze der Verbindung während des Ausrastvorganges.

Die innere Halterung einer Gleitschutzkette für Fahrzeugreifen ist als annähernd kreisförmiger Federstahlbügel 1 ausgebildet, welcher an einer Stelle offen ist und dessen freie Enden 2 und 3 Verschlußteile 4 und 5 aufweisen, welche als Haken 6 und Öse 7 ausgebildet sind.

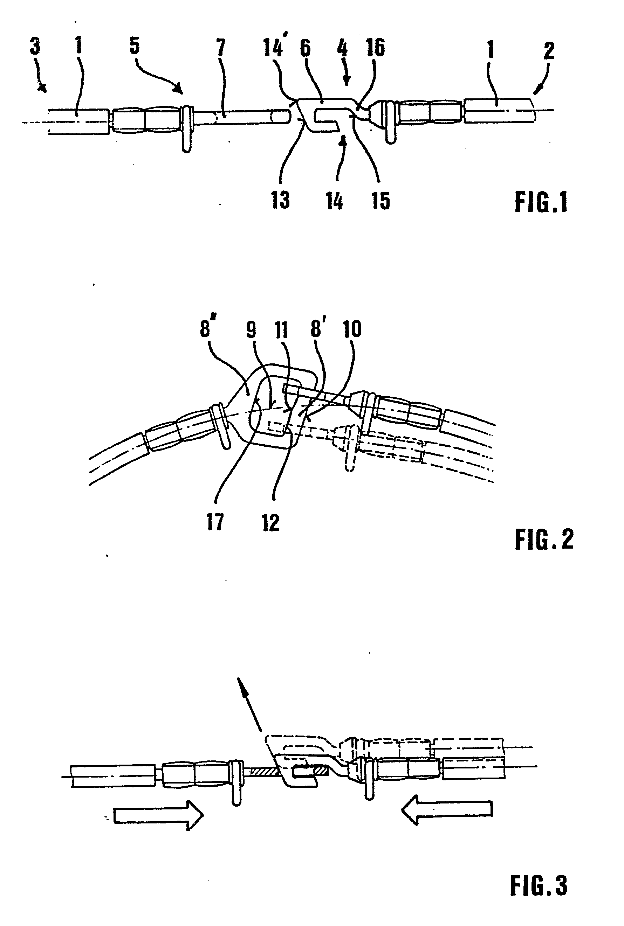

Die Öse 7 weist in der Draufsicht gemäß Fig. 2 eine Form auf, welche einem Parallelogram entspricht, dessen als unterer und oberer Steg 8' bzw. 8'' ausgebildete Unter- bzw. Oberseite und gegenüber der Mittelsenkrechten auf der kreisförmigen Mittellinie 9 des Federstahlbügels 1 geneigt angeordnet sind, dergestalt, daß der von der Außenkante 10 des Steges 8' mit der Mittelsenkrechten eingeschlossene, zur Radachse weisende Winkel sich zur Öse 7 hin öffnet.

Die Innenkante 11 des unteren Steges 8' ist im wesentlichen nach Art einer schiefen Ebene ausgebildet, deren höchster Punkt 12 gegenüber der Außenkante 10 des Steges 8' zur Reifenachse hin gelegen ist.

Der Haken 6 ist ebenfalls wie die Öse 7 flächig ausgebildet, ist aber um 90° zur Öse 7 gedreht angeordnet, so daß der Haken 6 mit einer seiner als schiefe Ebene ausgebildeten Stirnseite 13 auf der Außenkante 10 des Steges 8' der Öse 7 aufgleiten kann. Der höchste Punkt 14' der schiefen Ebene der Stirnseite 13 liegt der Hakenöffnung 14 schräg gegenüber, so daß der Haken 6 automatisch beim Gegeneinanderdrücken der Verschlußteile 4 und 5 in Richtung auf die Hakenöffnung 14 gehoben wird.

Weiter steht der Haken 6 mit seiner Längsachse senkrecht auf der Längsachse des unteren Steges 8', so daß er mit seiner Stirnseite 13 besser auf der Außenkante 10 des Steges 8' aufgleiten kann.

Der Haken 6 ist weiterhin gegenüber dem Federstahlbügel 1, insbesondere gegenüber dessen Mittellinie 9 zur Reifenwand hin abgekröpft, so daß die Verschlußteile 4 bzw. 5 bei eingerastetem Zustand in der Mittellinie 9 des Federstahlbügels 1 zu liegen kommen. Weiter ist die Innenseite 15 der Abkröpfung 16 des Hakens 6 ebenfalls als zur Stirnseite 13 parallele schiefe Ebene ausgebildet.

Das Schließen und Öffnen des Federstahlbügels 1 kann nun in einfacher Weise dergestalt erfolgen, daß die Bedienungsperson mit beiden Händen die jeweiligen Endteile 2 bzw. 3 des Federstahlbügels 1 in einem Abstand von den Verschlußteilen 4 bzw. 5 hinter dem Reifen greift und gegeneinanderführt, wobei die Verschlußteile 4 und 5 durch die Eigensteifigkeit des Federstahlbügels bereits nahe aneinander gehalten sind. Die Bedienungsperson drückt nun mit beiden Händen die Verschlußteile 4 und 5 gegeneinander, so daß der Haken 6 mit seiner Stirnkante 13 auf der Außenkante 10 der Öse 7 aufgleitet und bei weiterem Zusammendrücken in die Öse 7 einrastet. Hierbei gleitet ebenfalls durch die Eigensteifigkeit bzw. -spannung des Federstahlbügels 1 der Haken 6 durch die Ausbildung der Innenkante 12 des Steges 8' der Öse 7 als schiefe Ebene in eine nach außen gerichtete Position innerhalb der Öse 7, welche er auch bei Auftreten von Fliehkräften nicht verläßt. Die verhältnismäßig lang ausgebildete Stirnkante 10 des Steges 8' der Öse 7 gewährleistet, daß die Bedienungsperson den Haken 6 ohne hinzusehen in die Einrastposition verbringen kann, da der Haken 6 durch die Eigensteifigkeit des Federstahlbügels und durch die Länge des Steges 8' auf dessen Außenkante 13 gleitend die Öffnung der Öse 7 sucht und beim Zusammendrücken nicht nach außen hin an der Öse vorbeigedrückt werden kann.

In Figur 3 ist das leichte Öffnen des Verschlusses der inneren Halterung dargestellt, welches durch weiteres Überdrücken auf die Verschlußteile 4 bzw. 5 bewirkt wird. Der Haken 6 gleitet dann mit seiner als schiefe Ebene ausgebildeten Stirnseite 13 auf der Innenkante 17 des oberen Steges 8″ der Öse 7 aus dieser heraus, wobei die Außenkante 10 des unteren Steges 8′ ebenfalls an der als schiefen Ebene ausgebildeten Innenseite 15 der Abkröpfung 16 des Hakens 6 erleichternd aufgleitet.

## Patentansprüche

1. Gleitschutzkette für Fahrzeugreifen mit einer in montiertem Zustand jeweils gegen die Innenseite und die Außenseite des Reifens zur Anlage kommenden inneren und äußeren Halterung für sich über die Lauffläche des Reifens erstreckende Laufketten, wobei sowohl die innere als auch die äußere Halterung öffen- bzw. verschließbar ist, und die innere Halterung als mit einem Hakenverschluß versehener Federstahlbügel ausgebildet ist, wobei der an einem ersten freien Ende der inneren Halterung angeordnete eine Verschlußteil als im wesentlichen die Form eines Vierecks aufweisende Öse, und der andere, an einem zweiten freien Ende der inneren Halterung angeordnete Verschlußteil als senkrecht zur die Öffnung für den Haken enthaltenden Ebene der Öse angeordneter Haken (6) ausgebildet ist, dadurch gekennzeichnet, daß die Öse (7) mit ihrer die Öffnung für den Haken (6) enthaltenden Ebene flach an der Reifenseitenwandung aufliegt und mindestens die dem Haken (6) zugewandte Unterseite der Öse (7) gegenüber den anderen Seiten wesentlich breiter ausgebildet ist, so daß die Öffnung der Öse (7) gegenüber der Breite bzw. Dicke des Hakens (6) um ein Mehrfaches größer ist.

2. Gleitschutzkette für Fahrzeugreifen nach Anspruch 1, dadurch gekennzeichnet, daß die Unter- und Oberseite der viereckigen Öse (7) als paralleler unterer und oberer Steg (8′ bzw. 8″) ausgebildet sind, und welche gegenüber der Mittelsenkrechten auf der kreisförmigen Mittellinie (9) des Federstahlbügels (1) geneigt angeordnet sind, dergestalt, daß der von der Außenkante (10) des Steges (8′) mit der Mittelsenkrechten eingeschlossene, zur Radachse weisende Winkel sich zur Öse (7) hin öffnet.

3. Gleitschutzkette für Fahrzeugreifen nach Anspruch 1, dadurch gekennzeichnet, daß die Öse (7) als Parallelogramm ausgebildet ist, dessen Unter- und Oberseite als unterer und oberer Steg (8′ bzw. 8″) ausgebildet sind und welche gegenüber der Mittelsenkrechten auf der kreisförmigen Mittellinie (9) des Federstahlbügels (1) geneigt angeordnet sind, dergestalt, daß der von der Außenkante (10) des Steges (8′) mit der Mittelsenkrechten eingeschlossene, zur Radachse weisende Winkel sich zur Öse (7) hin öffnet.

4. Gleitschutzkette für Fahrzeugreifen nach Anspruch 1, dadurch gekennzeichnet, daß die Längsachse des Hakens (6) senkrecht zur Längsachse des unteren Steges (8′) angeordnet ist.

5. Gleitschutzkette für Fahrzeugreifen nach Anspruch 2 oder 3, dadurch gekennzeichnet, daß die Innenkante (11) des unteren Steges (8′) im wesentlichen als schiefe Ebene ausgebildet ist, deren höchster Punkt (12) gegenüber der Außenkante (10) des Steges (8′) zur Reifenachse hin gelegen ist.

6. Gleitschutzkette für Fahrzeugreifen nach Anspruch 1, dadurch gekennzeichnet, daß der Haken (6) an seiner Stirnseite (13) als schiefe Ebene ausgebildet ist, deren höchster Punkt (14′) der Hakenöffnung (14) gegenüber liegt.

7. Gleitschutzkette für Fahrzeuge nach Anspruch 6, dadurch gekennzeichnet, daß der Haken (6) gegenüber der Mittellinie (9) des Federstahlbügels (1) zur Radwandung hin abgekröpft ist, wobei die Innenseite (15) der Abkröpfung ebenfalls als zur schiefen Ebene der Stirnseite (13) des Hakens (6) parallele Ebene ausgebildet ist.

## Claims

1. Non-skid chain for vehicle tyres, comprising each inner and outer supports for chains covering the cap of the tyre, which supports when being mounted contact the inner wall and the outer wall of the tyre, in which connection both the inner support and the outer support can be opened and closed, and the inner support is designed as a spring steel bow provided with a hook lock, in which connection the one lock member attached at a first free end of the inner support is designed as an eyelet having essentially the form of a rectangle and the other lock member adapted at a second free end of the inner support is designed as hook (6) attached perpendicularly to the plane of the eyelet, which plane contains the opening for the hook, characterized in that eyelet (7) flatly contacts the tyre wall with its plane containing the opening for the hook (6) and at least the bottom side of the eyelet (7) facing the hook (6) is adapted essentially broader as compared with other sides, so that the opening of the eyelet (7) is several times larger as compared to breadth or width of the hook (6).

2. Non-skid chain for vehicle tyres according to claim 1, characterized in that the bottom and top sides of the rectangular eyelet (7) are adapted as parallel bottom and top fins (8′ or 8″) and which are arranged in inclined manner opposite the mean perpendicular on the circular median line (9) of the spring steel bow (1) in such a way that the angle facing the tyre axis and enclosed by the outer edge (10) of the fin (8′) with the mean perpendicular opens towards the eyelet (7).

3. Non-skid chain for vehicle tyres according to claim 1, characterized in that the eyelet (7) is adapted as parallelogram, the bottom and top sides of which are designed as bottom and top fins (8′ or 8″) and which are arranged in inclined manner opposite the mean perpendicular on the median line (9) of the spring steel bow (1) in such a way that the angle facing the tyre axis and enclosed by the outer edge (10) of the fin (8′) with the mean perpndicular opens towards the eyelet (7).

4. Non-skid chain for vehicle tyres according to claim 1, characterized in that the longitudinal axis of the hook (6) is arranged perpendicularly to the longitudinal axis of the bottom fin (8′).

5. Non-skid chain for vehicle tyres according to claim 2 or 3, characterized in that the inner edge (11) of the bottom fin (8′) is essentially designed as oblique plane whose highest point (12) is located opposite the outer edge (10) of the fin (8′) towards the tyre axis.

6. Non-skid chain for vehicle tyres according to claim 1, characterized in that at its front side (13) the hook (6) is designed as oblique plane whose highest point (14′) is located opposite the hook opening (14).

7. Non-skid chain for vehicle tyres according to claim 6, characterized in that the hook (6) is bent at a right angle towards the tyre wall opposite the median line (9) of the spring steel bow (1), in which connection the inner side (15) of the right-angle bent likewise is adapted as a plane parallel to the oblique plane of the front side (13) of the hook (6).

## Revendications

1. Chaîne antidérapante pour pneumatiques de véhicule comprenant une fixation interne et une fixation externe destinées à des chaînes de roulement s'étendant sur la surface de roulement du pneumatique, et venant en appui respectivement contre les faces interne et externe du pneumatique, en position installée, tant la fixation interne que la fixation externe pouvant être ouvertes ou fermées, la fixation interne étant réalisée sous forme d'un arceau en acier à ressort pourvu d'une fermeture à crochet, une pièce de fermeture, agencée à une première extrémité libre de la fixation interne, étant réalisée sous la forme d'une boucle présentant sensiblement la forme d'un quadrilatère et une autre pièce de fermeture, agencée à une deuxième extrémité libre de la fixation interne, étant réalisée sous la forme d'un crochet (6) agencé perpendiculairement au plan de la boucle comportant l'ouverture pour le crochet, caractérisée en ce que la boucle (7) repose avec son plan comportant l'ouverture pour le crochet (6) à plat sur la paroi latérale du pneumatique et en ce qu'au moins le côté inférieur de la boucle (7) tourné vers le crochet (6) est réalisé beaucoup plus large que les autres côtés de façon que l'ouverture de la boucle (7) soit plusieurs fois plus grande que la largeur ou l'épaisseur du crochet (6).

2. Chaîne antidérapante pour pneumatiques de véhicule suivant la revedication 1, caractérisée en ce que le côté inférieur et le côté supérieur de la boucle quadrangulaire (7) sont réalisés sous la forme de barrettes parallèles inférieures et supérieures (8′ ou 8″) qui sont agencées d'une manière inclinée par rapport à la normale sur la ligne médiane (9) en forme de cercle de l'arceau en acier à ressort (1) de façon que l'angle tourné vers l'axe de la roue et compris entre le bord externe (10) de la barrette (8′) et la normale s'ouvre vers la boucle (7).

3. Chaîne antidérapante pour pneumatiques de véhicule suivant la revendication 1, caractérisée en ce que la boucle (7) est réalisée en forme de parallélogramme dont les côtés inférieur et supérieur sont réalisés sous la forme de barrettes inférieure et supérieure (8′ ou 8″) qui sont agencées de manière inclinée par rapport à la normale à la ligne médiane (9) en forme de cercle de l'arceau en acier à ressort (1) de façon que l'angle tourné vers l'axe de la roue et compris entre le bord externe (10) de la barrette (8′) et la normale s'ouvre vers la boucle (7).

4. Chaîne antidérapante pour pneumatiques de véhicule suivant la revendication 1, caractérisée en ce que l'axe longitudinal du crochet (6) est disposé perpendiculairement à l'axe longitudinal de la barrette inférieure (8′).

5. Chaîne antidérapante pour pneumatiques de véhicule suivant la revendication 3, caractérisée en ce que le bord interne (11) de la barrette inférieure (8′) est réalisé sensiblement selon un plan oblique dont le point le plus haut (12) par rapport au bord externe (10) de la barrette (8′) est situé vers l'axe du pneumatique.

6. Chaîne antidérapante pour pneumatiques de véhicule suivant la revendication 1, caractérisée en ce que le crochet (6) est, à son côté frontal (13), réalisé sous la forme d'un plan oblique dont le point le plus haut (14′) se situe en face de l'ouverture du crochet (14).

7. Chaîne antidérapante pour véhicules suivant la revendication 6, caractérisée en ce que le crochet (6) est coudé par rapport à la ligne médiane (9) de l'arceau en acier à ressort (1), vers la paroi de la roue, le côté interne (15) du coude étant également réalisé sous la forme d'un plan parallèle au plan oblique du côté frontal (13) du crochet (6).

FIG.1

FIG.2

FIG.3